Europäisches Patentamt

**European Patent Office**

**Office européen des brevets**

(11) Veröffentlichungsnummer : **0 094 537**
**B1**

(12) **EUROPÄISCHE PATENTSCHRIFT**

(45) Veröffentlichungstag der Patentschrift :
**10.09.86**

(21) Anmeldenummer : **83104266.8**

(22) Anmeldetag : **30.04.83**

(51) Int. Cl.⁴ : **B 23 B 27/04,** B 23 B 29/26

(54) **Ein- und Mehrfachstechwerkzeug.**

(30) Priorität : **19.05.82 DE 3219019**

(43) Veröffentlichungstag der Anmeldung :
**23.11.83 Patentblatt 83/47**

(45) Bekanntmachung des Hinweises auf die Patenterteilung : **10.09.86 Patentblatt 86/37**

(84) Benannte Vertragsstaaten :
**AT BE CH DE FR GB IT LI LU NL SE**

(56) Entgegenhaltungen :
**DE-C- 617 343**
**GB-A- 2 085 333**
**US-A- 3 675 291**
**US-A- 3 760 474**
**US-A- 4 063 841**
**MACHINES & TOOLING, Band 48, Nr. 1, 1977, Melton**
**Mowbray N.M., SBOEV et al. "Composite multi-posi-**
**tion tool-holder", Seiten 50,51**

(73) Patentinhaber : **Zinner GmbH**
**Karl-Martell-Strasse 35**
**D-8500 Nürnberg 80 (DE)**

(72) Erfinder : **Zinner, Karl**
**Uehlfelder Strasse 21**
**D-8500 Nürnberg 80 (DE)**

(74) Vertreter : **Patentanwälte Czowalla . Matschkur +**
**Partner**
**Dr.-Kurt-Schumacher-Strasse 23 Postfach 9109**
**D-8500 Nürnberg 11 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Ein- oder Mehrfachstechwerkzeug mit lösbar in einer Ausnehmung eines Halters verklemmbaren Schneidplatten, die mittels eines im wesentlichen L-förmigen, die Schneidplatte bzw. ein Schneidplattenpaket von oben und einer Seite übergreifenden Spannbügels gegen den Boden und eine Seitenwand der Ausnehmung geklemmt werden, wobei bei der Verspannung des Spannbügels gegen den Boden über eine Keilrampe eine Klemmkraftkomponente des Spannbügels quer zur Seitenwand erzeugt wird.

Ein derartiges, aus der US-Patentschrift 3 675 291 bekanntgewordenes, Stechwerkzeug hat den Vorteil, daß durch die Betätigung der Klemmschraube nicht nur die Schneidplatten nach unten gegen den Boden der Halterausnehmung gepreßt, sondern gleichzeitig auch durch die dabei erzeugte Querkomponente als Paket gegeneinander verspannt werden.

Die Schwierigkeit bei diesem vorbekannten Stechwerkzeug besteht zum einen darin, daß dort die zusätzlichen Schneidplatten mit einer Rippe versehen auf der Hauptschneidplatte oben aufgehängt sind und daß eine exakte Positionierung — d. h. die Abstände der Schneidkanten der unterschiedlichen Platten voneinander — schwierige Justierungsarbeiten erfordert und die Gefahr besteht, daß sich diese Justierung aufgrund der Beanspruchungen im Betrieb verstellt.

Der Erfindung liegt daher die Aufgabe zugrunde, ein Stechwerkzeug der vorstehend beschriebenen Art so auszugestalten, daß die Schneidplatte rasch und positionsgenau verspannbar sind, so daß auch beim Wenden oder Auswechseln der Schneidplatte keine umständlichen Justierarbeiten erforderlich sind.

Zur Lösung dieser Aufgabe ist erfindungsgemäß vorgesehen, daß am Boden der Ausnehmung und/oder der Unterseite des oberen Klemmschenkels des Spannbügels in Passungsnuten aller Schneidplatte eingreifende Justierrippen angeordnet sind.

Durch die erfindungsgemäßen Passungsnuten, die bei der bevorzugten Verwendung von Wendeplatten mittig angeordnet und paßgenau bezüglich der Schneiden eingeschliffen sind, ergibt sich in Verbindung mit den endseitigen Beilagen zwischen den verschiedenen Schneidplatten eine sehr einfache Wiederholgenauigkeit des Systems, ohne daß nur die geringste Justierarbeit aufgebracht werden muß.

Die Erzeugung der Klemmkraftkomponente quer zur Seitenwand kann gemäß einer ersten Ausführungsform des Erfindungsgedankens dadurch erreicht werden, daß die der Platte bzw. dem Plattenpaket seitlich anliegenden, sich nach unten keilförmig erweiternden Schenkel des Spannbügels und der gegenüberliegenden Wand der Ausnehmung ein nicht selbstklemmender Klemmkeil zwischengeordnet ist. Bei Verspannung dieses Klemmkeils mit Hilfe einer Klemmschraube erfolgt sowohl ein Andrücken des oberen Schenkels des Spannbügels an die Oberseiten der Platten, als auch ein Andrücken des seitlich anliegenden Schenkels des Spannbügels an die Außenfläche und damit eine Verspannung gegen die Seitenwand.

Der Innenwinkel des Spannbügels soll dabei in Ausgestaltung der Erfindung etwas kleiner sein als 90°, so daß sich der Haltebügel spannzangenartig um das Wechselplattenpaket legt. Dabei wird zunächst der obere Klemmschenkel des Spannbügels an seinem, bevorzugt seitlich neben dem Plattenpaket auf dem Halter aufliegenden, Ende nach unten gedrückt und erst nach dem klemmenden Anliegen dieses oberen Klemmschenkels auf dem Plattenpaket erfolgt das Zusammenpressen über den seitlichen Keil-Schenkel.

Die Verspannung des Klemmkeils gegen den Boden der Ausnehmung erfolgt am einfachsten durch eine Spannschraube, die beispielsweise seitlich neben dem Klemmkeil in eine Gewindebohrung des Halters einschraubbar ist und mit ihrem Kopf entweder den Klemmkeil übergreift, oder in eine seitliche Spannut des Klemmkeils eingreift. Um dabei seitliche Verschiebungen des Klemmkeils zu vermeiden und auf diese Weise die Montage besonders einfach gestalten zu können, kann ein von unten in eine Bohrung des Klemmkeils eingreifender, im Halter befestigter Führungsbolzen vorgesehen sein.

Obgleich es für die meisten Anwendungsfälle gar nicht erforderlich wäre, kann zur weiteren Erhöhung der Spannsicherheit noch eine Spannschraube zum Festlegen des neben der Ausnehmung auf dem Halter aufliegenden freien Endes des oberen Klemmschenkels des Spannbügels vorgesehen sein. Das Festziehen dieser Schraube, die den oberen Klemmschenkel zur Ermöglichung der Zusammenpressung des Plattenpakets selbstverständlich in einem Langloch durchsetzen muß, erfolgt erst nach der Verspannung des Klemmkeils.

Gemäß einer weiteren Ausführungsform des Erfindungsgedankens kann die Erzeugung der Klemmkraftkomponente des Spannbügels quer zur Seitenwand auch dadurch erreicht werden, daß am freien Ende des die Platte bzw. das Plattenpaket oben übergreifenden Schenkels des Spannbügels ein auf einer Keilrampe des Halters sich abstützender Querverspannungs-Nocken vorgesehen ist und daß eine den Schenkel in einem Langloch durchsetzende Spannschraube zwischen dieser Rampe und der Seitenwand in eine Gewindebohrung des Halters eingreift. Bei dieser Ausführungsform, bei der der dem Plattenpaket seitlich anliegende Schenkel des Spannbügels relativ kurz gehalten werden kann, ist es in weiterer Ausgestaltung der Erfindung besonders vorteilhaft, wenn der Querverspannungs-Nocken durch eine Gewindeschraube mit kegelförmiger Spitze gebildet ist.

Mit besonderem Vorteil soll die Justierrippe an einer die Grundfläche der Ausnehmung ausfüllenden, durch einen sie durchsetzenden Bolzen, insbesondere den Führungsbolzen des Klemmkeils, gehaltere Unterlegplatte angeformt sein, so daß entsprechend die Spannuten auf der Unterseite der Platten angeordnet sein müssen.

Weitere Vorteile der Erfindung ergeben sich aus der nachfolgenden Beschreibung einiger Ausführungsbeispiele, sowie an Hand der Zeichnung. Dabei zeigen :

Figur 1  eine Vorderansicht eines erfindungsgemäßen Mehrfachstechwerkzeuges,

Figur 2  eine Draufsicht auf ein abgewandeltes Mehrfachstechwerkzeug,

Figur 3  einen Schnitt längs der Linie III-III in Fig. 1,

Figur 4 bis 7  teilweise ausschnittsweise Seitenansichten einer Wendeplatte mit unterschiedlichen Passungsnuten,

Figur 8  eine Draufsicht auf eine Wendeplatte,

Figur 9  eine Seitenansicht eines erfindungsgemäßen Einfachstechwerkzeug mit einer dreiseitig offenen Ausnehmung des Halters zur Aufnahme der Schneidplatte und

Figur 10  einen Schnitt längs der Linie X-X in Fig. 9.

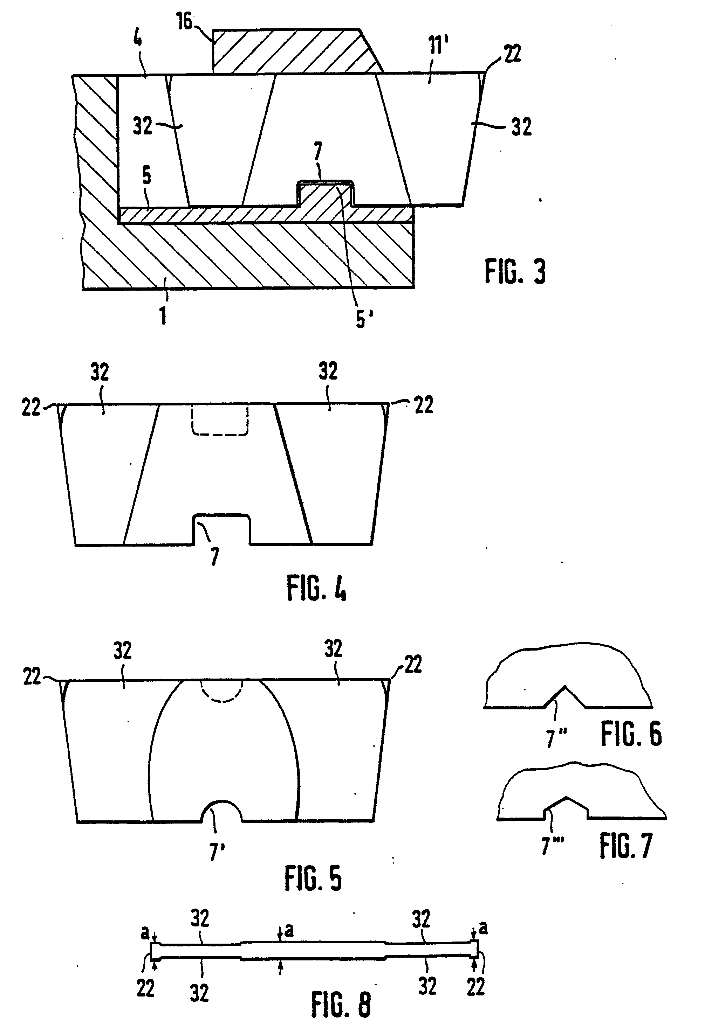

Im Halter 1 ist eine zur Arbeitsstirnseite 2 sowie zur Oberseite 3 hin offene Ausnehmung 4 angeordnet, auf deren Boden eine Unterlegplatte 5 mittels eines sie durchsetzenden Bolzens 6 gehaltert ist, an deren Oberseite eine Justierrippe 5' angeformt ist. Die Justierrippe 5' greift in Passungsnuten 7 von als Wendeplatten ausgebildeten Schneidplatten 8 bis 11 ein, die mit Hilfe von endmaßartigen Beilagplatten 12 bis 14 sowie einer zum Schutz dienenden äußeren Beilagplatte 15 mit Hilfe eines Spannbügels 16 gehalert werden. Der Spannbügel 16 ist im wesentlichen L-förmig ausgebildet, wobei der obere Klemmschenkel 17 auf dem Plattenpaket aufliegt, während der zweite, sich zu seinem freien Ende hin keilförmig erweiternde Schenkel 18 des Plattenpakets seitlich anliegt. Durch einen von einer Spannschraube 19 nach unten gezogenen, nicht selbstklemmend ausgebildeten Klemmkeil 20, erfolgt die Verspannung des Spannbügels 16, dessen Inenwinkel etwas kleiner ist als 90°. Dadurch wird erreicht, daß zunächst der obere Klemmschenkel 17 an seinem Ende nach unten gedrückt und somit schließlich insgesamt klemmend auf das Plattenpaket aufgedrückt wird, ehe das Plattenpaket in Richtung auf die Seitenwand 21 der Ausnehmung 4 gedrückt wird. Durch paßgenaues Einschleifen der Ausnehmung 7 bezüglich der Schneidkanten 22 der als Wendeplatten ausgebildeten Stechplatten (vergleiche insbesondere Fig. 3 und 4) ergibt sich eine exakte Wiederholgenauigkeit des Systems, sowohl beim Wenden der Platten, als auch bei ihrem Auswechseln, ohne irgendwelchen gesonderten Justieraufwand.

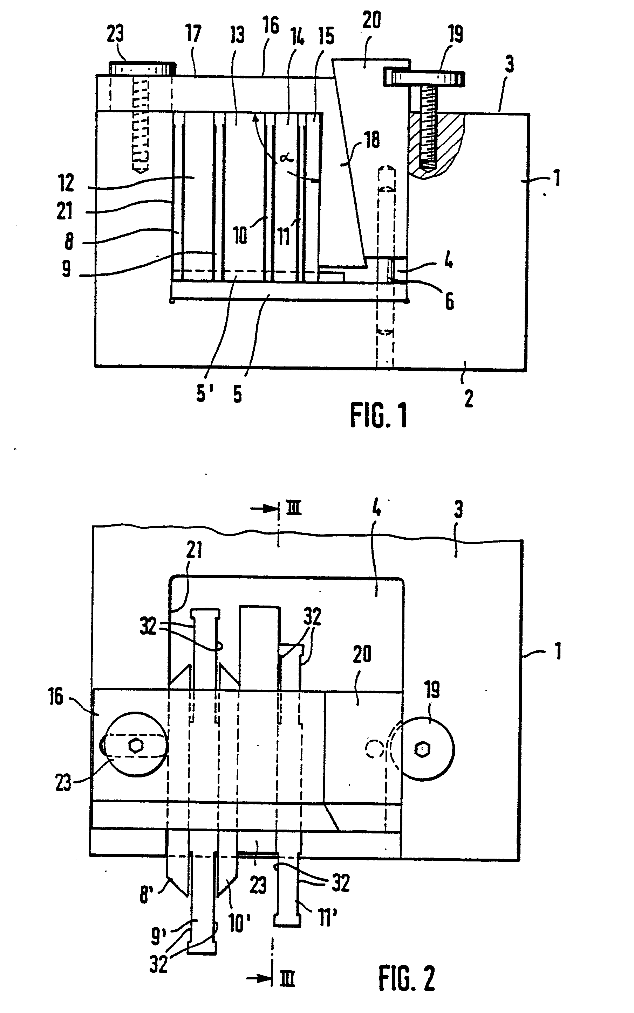

In Fig. 2 erkennt man ein Mehrfachstechwerkzeug, bei dem die Stechplatten 8' und 10' die Kanten der Nut brechen, die von der Stechplatte 9' in das Werkstück eingearbeitet wird, während in einem paßgenauen Abstand dazu, der sich durch die endmaßartige Beilagplatte 23 ergibt, die Stechplatte 11' eine weitere, jedoch weniger tiefe Nut in das Werkstück einarbeitet.

In den Fig. 4 bis 7 sind unterschiedliche Formen. der Passungsnuten 7, 7', 7" und 7''' dargestellt, wobei gestrichelt in den Fig. 4 und 5 auch die Möglichkeit angedeutet ist, diese Nuten in der Oberseite der Stechplatten unterzubringen, was es dann allerdings erforderlich machen würde, die Justierrippe 5' an der Unterseite des Schenkels 17 anzuformen.

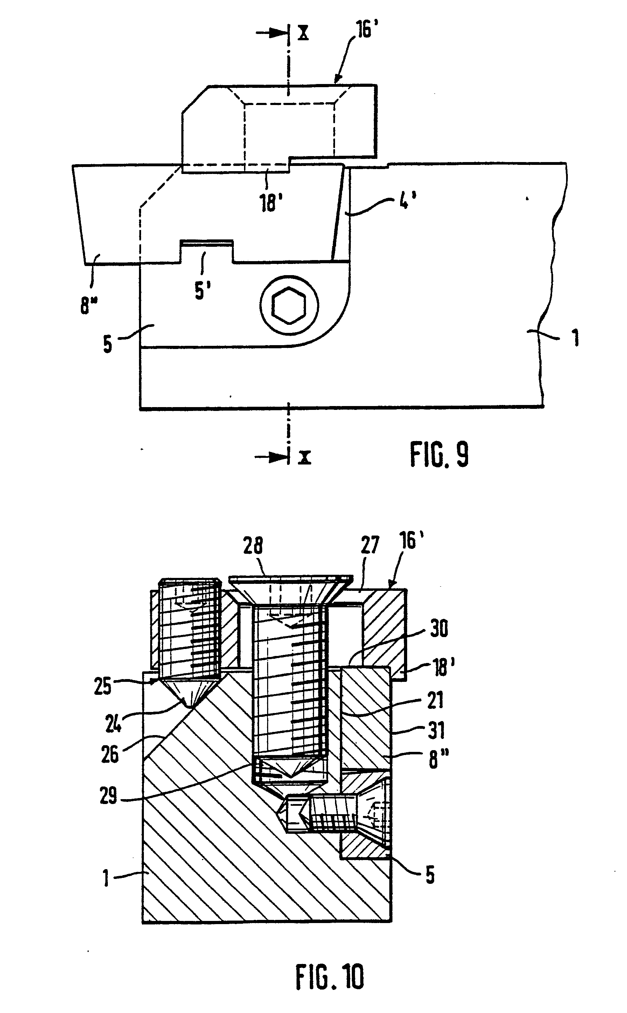

Die Fig. 9 und 10 zeigen ein Einfachstechwerkzeug mit einer dreiseitig offenen Ausnehmung 4' des Halters 1. Der Spannbügel 16' ist dabei an dem dem verkürzten Schenkel 18', der der Seitenfläche der Schneidplatte 8" anliegt, gegenüberliegenden Ende mit einem durch eine Gewindeschraube mit kegelförmiger Spitze 24 gebildeten Querverspannungs-Nocken 25 versehen, der sich auf einer Schrägrampe 26 des Halters 1 abstützt. Beim Verspannen des Spannbügels 16' mit Hilfe einer in ein Langloch 27 eingreifenden Spannschraube 28, die in eine Gewindebohrung 29 zwischen der Rampe 26 und der Seitenwand 21 der Ausnehmung 4 eingreift, ergibt sich neben der Klemmkraft auf die Oberseite 30 der Schneidplatte 8" auch eine Klemmkraftkomponente des Spannbügelschenkels 18' auf die Außenfläche 31 der Schneidplatte 8" und damit eine Verspannung in Richtung auf die Seitenwand 21 der Ausnehmung 8.

Für das Paketieren der Platten bei Mehrfachstechwerkzeugen ist es nicht nur wichtig, daß das Mittelteil der Platten und die Schneidenden exakt die gleiche Dicke a aufweisen (was in Fig. 8 angedeutet ist), sondern es· ist auch vorteilhaft, wenn man zwischen dem paßgenauen Mittelabschnitt und den Schneidenden Aussparungen 32 vorsieht, so daß die Schneidkanten benachbarter Platten seitlich freiliegen und nicht an der Nachbarplatte anstoßen. Dies ermöglicht ersichtlich auch die Verwendung von Schneidplatten, bei denen die vorgenannte Bedingung der gleichen Breite der mittleren Stapelabschnitte der Platten und der Schneiden 22 nicht erfüllt ist. Es können also die Schneiden eine etwas größere Breite haben, da sie ja dann im Bereich der Ausnehmungen 32 der benachbarten Platten zu liegen kommen.

**Patentansprüche**

1. Ein- oder Mehrfachstechwerkzeug mit lösbar in einer Ausnehmung (4) eines Halters verklemmbaren Schneidplatten (8-11), die mittels eines im wesentlichen L-förmigen, die Schneidplatte bzw. ein Schneidplattenpaket von oben und einer Seite übergreifenden Spannbügels (16) gegen den Boden und eine Seitenwand (21) der Ausnehmung geklemmt werden, wobei bei der Verspannung des Spannbügels gegen den Boden über eine Keilrampe eine Klemmkraftkomponente des Spannbügels quer zur Seitenwand erzeugt wird, dadurch gekennzeichnet, daß am Boden der Ausnehmung und/oder der Unterseite des oberen Klemmschenkels (17) des Spannbügels (16) in Passungsnuten (7) aller Schneidplatten (8-11) eingreifende Justierrippen (5') angeordnet sind.

2. Stechwerkzeug nach Anspruch 1, gekennzeichnet durch verkürzte endmaßartige Beilagscheib en (12-15).

3. Stechwerkzeug nach Anspruch 1 oder 2, dadurch gekennzeichnet, daß dem der Schneidplatte, bzw. dem Schneidplattenpaket seitlich anliegenden, sich nach unten keilförmig erweiternden Schenkel (18) des Spannbügels und der gegenüberliegenden Wand der Ausnehmung (4) ein nicht selbstklemmender Klemmkeil (20) zwischengeordnet ist.

4. Stechwerkzeug nach einem der Ansprüche 1 bis 3, dadurch gekennzeichnet, daß der Innenwinkel (α) zwischen den Schenkeln (17, 18) des Spannbügels (16) etwas kleiner ist als 90°.

5. Stechwerkzeug nach Anspruch 3 oder 4, dadurch gekennzeichnet, daß der Klemmkeil (20) durch eine Spannschraube (19) gegen den Boden der Ausnehmung (4) verspannbar ist.

6. Stechwerkzeug nach Anspruch 5, dadurch gekennzeichnet, daß die seitlich neben dem Klemmkeil (20) in eine Gewindebohrung des Halters (1) einschraubbare Spannschraube (19) mit ihrem Kopf den Klemmkeil übergreift oder in eine seitliche Spannut eingreift.

7. Stechwerkzeug nach einem der Ansprüche 3 bis 6, gekennzeichnet durch einen von unten in eine Bohrung des Klemmkeils (20) eingreifenden, im Halter befestigten Führungsbolzen (6).

8. Stechwerkzeug nach einem der Ansprüche 1 bis 7, gekennzeichnet durch eine Spannschraube (23) zum Festlegen des neben der Ausnehmung (4) auf dem Halter (1) aufliegenden freien Endes des oberen Klemmschenkels (17) des Spannbügels (16).

9. Stechwerkzeug nach Anspruch 1 oder 2, dadurch gekennzeichnet, daß am freien Ende des die Schneidplatte bzw. das Schneidplattenpaket oben übergreifenden Schenkels (17) des Spannbügels (16') ein auf einer Keilrampe des Halters sich abstützender Querverspannungs-Nocken vorgesehen ist und daß eine den Schenkel in einem Langloch (27) durchsetzende Spannschraube zwischen der Rampe (26) und der Seitenwand (21) in eine Gewindebohrung (29) des Halters eingreift.

10. Stechwerkzeug nach Anspruch 9, dadurch gekennzeichnet, daß der Querverspannungs-Nocken (25) durch eine Gewindeschraube mit kegelförmiger Spitze (24) gebildet ist.

11. Stechwerkzeug nach · einem der Ansprüche 1 bis 10, dadurch gekennzeichnet, daß die Justierrippe (5') an einer die Grundfläche der Ausnehmung (4) ausfüllenden, durch einen sie durchsetzenden Bolzen gehalterten Unterlegplatte (5) angeformt ist.

12. Als Wendeplatte ausgebildete Schneidplatte für ein Stechwerkzeug nach einem der Ansprüche 1 bis 11, dadurch gekennzeichnet, daß die mittig angeordnete Passungsnut (7) paßgenau bezüglich der Schneiden (22) eingeschliffen ist.

13. Schneidplatte nach Anspruch 12, dadurch gekennzeichnet, daß die Passungsnut (7) auf der Unterseite angeordnet ist.

14. Schneidplatte nach Anspruch 12 oder 13, dadurch gekennzeichnet, daß sie seitliche Ausnehmungen (32) zwischen den Schneiden (22) und dem mittleren Stapelabschnitt aufweist.

## Claims

1. A single or multiple cutting-off tool having cutting plates (8-11) which can be detachably locked in a recess (4) in a holder and which are clamped against the bottom and one side wall (21) of the recess by means of a substantially L-shaped clamp (16) engaging over the cutting plate or a stack of cutting plates from above and one side, while during the fastening of the clamp in relation to the bottom, a clamping-force component of the clamp is produced transversely to the side wall through a wedge-shaped ramp, characterised in that adjusting ribs (5') engaging in fitting grooves (7) of all the cutting plates (8-11) are disposed at the bottom of the recess and/or the under side of the upper clamping arm (17) of the clamp (16).

2. A cutting-off tool as claimed in Claim 1, characterised by shortened gauge-block-like shims (12-15).

3. A cutting-off tool as claimed in Claim 1 or 2, characterised in that a non-self-locking clamping wedge (20) is interposed between the arm (18) of the clamp bearing laterally against the cutting plate or the stack of cutting plates ans widening out downwards in the form of a wedge, and the opposite wall of the recess (4).

4. A cutting-off tool as claimed in one of the Claims 1 to 3, characterised in that the internal angle (α) between the arms (17, 18) of the clamp (16) is somewhat smaller than 90°.

5. A cutting-off tool as claimed in Claim 3 or 4, characterised in that the clamping wedge (20) can be urged towards the bottom of the recess (4) by a tightening screw (19).

6. A cutting-off tool as claimed in Claim 5, characterised in that a head of the tightening screw (19), which can be screwed into a tapped bore in the holder (1) beside the clamping wedge (20), engages over the clamping wedge or in a lateral clamping groove.

7. A cutting-off tool as claimed in any one of Claims 3 to 6, characterised by a guide bolt (6) engaging from below in a bore in the clamping wedge (20) and secured in the holder.

8. A cutting-off tool as claimed in one of the Claims 1 to 7, characterised by a tightening screw (23) to locate the free end of the upper clamping arm (17) of the clamp (16), which end rests on the holder (1) beside the recess (4).

9. A cutting-off tool as claimed in Claim 1 or 2, characterised in that provided at the free end of the arm (17) of the clamp (16') engaging over the cutting plate or the stack of cutting plates at the top is a transverse bracing pin supported on a wedge-shaped ramp of the holder and that a tightening screw which passes through the arm in a slot (27) engages in a tapped bore (29) in the holder, between the ramp (26) and the side wall (21).

10. A cutting-off tool as claimed in Claim 9, characterised in that the transverse bracing pin (25) is formed by a threaded screw with a conical tip (24).

11. A cutting-off tool as claimed in one of Claims 1 to 10, characterised in that the adjusting rib (5') is formed on a supporting plate (5) filling in the bottom of the recess (4) and held by a bolt passing throught it.

12. A cutting plate constructed in the form of a reversible tool bit for a cutting-off tool as claimed in one of Claims 1 to 11, characterised in that the fitting groove (7) disposed centrally is ground with an accurate fit with respect to the cutting edges (22).

13. A cutting plate as claimed in Claim 12, characterised in that the fitting groove (7) is disposed at the under side.

14. A cutting plate as claimed in Claim 12 or 13, characterised in that it comprises lateral recesses (32) between the cutting edges (22) and the central portion of the stack.

**Revendications**

1. Outil de tronçonnage à action simple ou multiple, comportant des plaques de coupe (8-11) qui peuvent être coincées amoviblement dans l'évidement (4) d'un support et sont coincées contre le fond et une paroi latérale (21) de l'évidement, au moyen d'un étrier de serrage (16) configuré sensiblement en L et emprisonnant par-dessus et par un côté la plaque de coupe ou, respectivement, un groupe de plaques de coupe, outil dans lequel, lors du blocage de l'étrier de serrage contre le fond, une composante de force de coincement de cet étrier de serrage est engendrée, par l'intermédiaire d'une rampe cunéiforme, perpendiculairement à la paroi latérale, caractérisé par le fait que des barrettes de réglage (5'), s'engageant dans des gorges d'adaptation (7) de toutes les plaques de coupe (8-11), sont disposées au fond de l'évidement et/ou à la face inférieure de la branche supérieure de coincement (17) de l'étrier de serrage (16).

2. Outil de tronçonnage selon la revendication 1, caractérisé par des disques de calage (12-15) raccourcis, du type cales-étalons.

3. Outil de tronçonnage selon la revendication 1 ou 2, caractérisé par le fait qu'un coin de serrage (20), n'exerçant aucun effet d'autoblocage, est intercalé entre la branche (18) de l'étrier de serrage qui porte latéralement contre la plaque de coupe ou le groupe de plaques de coupe et présente un évasement cunéiforme vers le bas, et la paroi opposée de l'évidement (4).

4. Outil de tronçonnage selon l'une des revendications 1 à 3, caractérisé par le fait que l'angle interne (α) entre les branches (17, 18) de l'étrier de serrage (16) est sensiblement inférieur à 90°.

5. Outil de tronçonnage selon la revendication 3 ou 4, caractérisé par le fait que le coin de serrage (20) peut être bloqué contre le fond de l'évidement (4) par l'intermédiaire d'une vis de serrage (19).

6. Outil de tronçonnage selon la revendication 5, caractérisé par le fait que la vis de serrage (19), pouvant être vissée latéralement à côté du coin de serrage (20) dans un trou taraudé du support (1), coiffe par sa tête le coin de serrage ou s'engage, par sa tête, dans une gorge latérale de blocage.

7. Outil de tronçonnage selon l'une des revendications 3 à 6, caractérisé par un boulon de guidage (6) fixé dans le support et pénétrant, de bas en haut, dans un trou ménagé dans le coin de serrage (20).

8. Outil de tronçonnage selon l'une des revendications 1 à 7, caractérisé par une vis de blocage (23) pour verrouiller à demeure l'extrémité libre de la branche supérieure de coincement (17) de l'étrier de serrage (16), qui porte sur le support (1) à côté de l'évidement (4).

9. Outil de tronçonnage selon la revendication 1 ou 2, caractérisé par le fait qu'il est prévu, à l'extrémité libre de la branche (17) de l'étrier de serrage (16) emprisonnant en partie haute la plaque de coupe ou le groupe de plaques de coupe, une came de blocage transversal prenant appui contre une rampe cunéiforme du support ; et par le fait qu'une vis de serrage traversant la branche par l'intermédiaire d'une boutonnière (27) s'engage, entre la rampe (26) et la paroi latérale (21), dans un trou taraudé (29) dudit support.

10. Outil de tronçonnage selon la revendication 9, caractérisé par le fait que la came de blocage transversal (25) est formée par une vis à pointe conique (24).

11. Outil de tronçonnage selon l'une des revendications 1 à 10, caractérisé par le fait que la barrette de réglage (5') est façonné sur une plaquette de calage (5) qui comble la surface du fond de l'évidement (4) et est retenue par l'intermédiaire d'un boulon qui la traverse.

12. Plaque de coupe réalisée en tant que plaque réversible, pour un outil de tronçonnage selon l'une des revendications 1 à 11, caractérisée par le fait que la gorge d'adaptation (7) occupant une position centrale est rectifiée avec ajustement précis par rapport aux tranchants (22).

13. Plaque de coupe selon la revendication 12, caractérisée par le fait que la gorge d'adaptation (7) se trouve à la face inférieure.

14. Plaque de coupe selon la revendication 12 ou 13, caractérisée par le fait qu'elle présente des évidements latéraux (32) entre les tranchants (22) et le tronçon médian d'empilement.

FIG. 1

FIG. 2

FIG. 3

FIG. 4

FIG. 5

FIG. 6

FIG. 7

FIG. 8

FIG. 9

FIG. 10